# NEUE EUROPÄISCHE PATENTSCHRIFT

(11) **EP 1 109 712 B2**
(45) Veröffentlichungstag und Bekanntmachung des Hinweises auf die Entscheidung über den Einspruch: **04.11.2009**
(45) Hinweis auf die Patenterteilung: 15.09.2004
(21) Anmeldenummer: 00939012.1
(22) Anmeldetag: 04.07.2000
(51) Int. Cl.: B62D 25/14

(54) **DICHTUNG**
GASKET
GARNITURE D'ETANCHEITE

(30) Priorität: 05.07.1999 DE 19930900
(43) Veröffentlichungstag der Anmeldung: 27.06.2001
(73) Patentinhaber: Valeo Klimasysteme GmbH, 96476 Rodach (DE)
(72) Erfinder: SUCK, Wolfgang, D-96450 Coburg (DE)
(74) Vertreter: Hofmann, Harald
(86) Internationale Anmeldenummer: PCT/IB2000/000948
(87) Internationale Veröffentlichungsnummer: WO 2001/002234

(56) Entgegenhaltungen:
- EP-A- 0 629 939
- EP-B1- 0 213 977
- DE-A- 19 849 398
- DE-A1- 3 701 597
- DE-U1- 8 236 581
- DE-U1- 8 810 952
- DE-U1- 9 405 663
- JP-A1- 10 278 563
- JP-A1- 11 078 982

## Beschreibung

Die vorliegende Erfindung betrifft eine Dichtung mit den Merkmalen des Oberbegriffes des Anspruchs 1. Eine derartige Dichtung ist aus der EP-A-0 669 486 bekannt.

In Kraftfahrzeugen befindet sich üblicherweise zwischen dem Motorraum und dem Fahrgastraum ein Karosserieblech, welches auch Stirnwand genannt wird. Verschiedenste Anschlußeinrichtungen, wie z.B. Bowdenzüge, Kabel und Rohrleitungen müssen durch dieses Karosserieblech geführt werden. Hierbei ist sowohl eine Wasserdichtheit als auch eine möglichst gute Geräuschisolation gewünscht.

Die EP-A-0 669 486 offenbart eine Manschette, welche die Lenkvorrichtung eines Fahrzeuggehäuses schützt. Die Manschette wird durch zwei Befestigungsringe fixiert, wobei ein Befestigungsring am Lenkgehäuse und ein Befestigungsring an der Nabe angebracht ist, um einen Raum zwischen der Lenkstange abzudichten. Durch Umschließen eines Lenkgestängeabschnitts mittels einer Manschette, das am Ende mit Befestigungsringen fixierbar ist, wird das Eindringen von Nässe und Schmutz verhindert.

Um die verschiedenen Anschlußeinrichtungen durch die Stirnwand zu führen sind in dieser üblicherweise Hohlräume als Durchgangsöffnungen ausgebildet. Bisher wird für jede Anschlußeinrichtung ein Hohlraum vorgesehen, der von dieser durchdrungen wird. Im Übergangsbereich werden anschließend verschiedene Schäume und Gummiteile zu Dichtzwecken angeordnet. Meist wird bei der bekannten Lösung eine Manschette oder Muffe als Dichtung an der Anschlußeinrichtung gepaßt, die anschließend mit dem Karosserieblech mittels Schaum oder anderem Klebstoff bondiert oder anderweitig gedichtet wird. Demzufolge ist die bekannte Lösung arbeitsintensiv, erfordert viele Teile und erschwert eine spätere Wartung der Anschlußeinrichtungen. Es besteht daher Bedarf für eine verbesserte Dichtung.

Es ist Aufgabe der vorliegenden Erfindung eine Dichtung für einen von zumindest einer Anschlußeinrichtung einer Klimaanlage durchdrungenen Hohlraum in einem Karosserieblech mit einem anschlußeinrichtungsseitigem Dichtabschnitt und einem karosserieseitigem Dichtabschnitt in solch einer Weise weiterzubilden, daß eine montagetechnische Erleichterung erzielt wird, und zwar sowohl bei der Erstmontage als auch bei einer späteren Wartung. Die Dichtung soll sowohl wasserdicht sein als auch geräuschisolierend wirken. Die Dichtung soll die Anschlußeinrichtung(en) dämpfend an der Stirnwand lagern, wobei auch eine relative Dämpfung zwischen unterschiedlichen Anschlußeinrichtungen dargestellte ist.

Erfindungsgemäß wird diese Aufgabe durch eine die Verwendung Dichtung mit den Merkmalen des Anspruches 1 gelöst. Bevorzugte Verwendungsformen sind in den abhängigen Ansprüchen definiert.

Weitere Vorteile und Merkmale der Erfindung ergeben sich aus der folgenden rein illustrativen Beschreibung einer derzeit bevorzugten Ausführungsform, welche unter Bezugnahme auf die beiliegenden Zeichnungen erfolgt, in welchen gilt:
- Fig.1: ist eine perspektivische Darstellung einer Flanschdichtung, als bevorzugte Ausführungsform einer erfindungsgemäßen Dichtung, in einer Ansicht vom Motorraum aus gesehen.
- Fig.2: ist eine weitere perspektivische Darstellung der in Fig.1 gezeigten Ausführungsform, ebenfalls vom Motorraum aus gesehen, jedoch bei einem anderen Abbildungswinkel.
- Fig.3: ist eine fahrgastraumseitige Aufsicht auf die in den Fig. 1 und 2 dargestellte Ausführungsform.
- Fig.4: ist eine motorraumseitige Aufsicht auf die in den Fig. 1, 2 und 3 dargestellte Ausführungsform.
- Fig.5: ist eine Seitenansicht der in Fig. 1-4 dargestellte Ausführungsform.
- Fig.6: ist eine Schnittansicht entlang der Ebene A-A von Fig. 5.
- Fig.7: ist eine vergrößerte Schnittansicht entlang der Ebene B-B von Fig. 4.
- Fig.8: ist eine vergrößerte Detailschnittansicht entlang der Ebene D-D von Fig. 3.

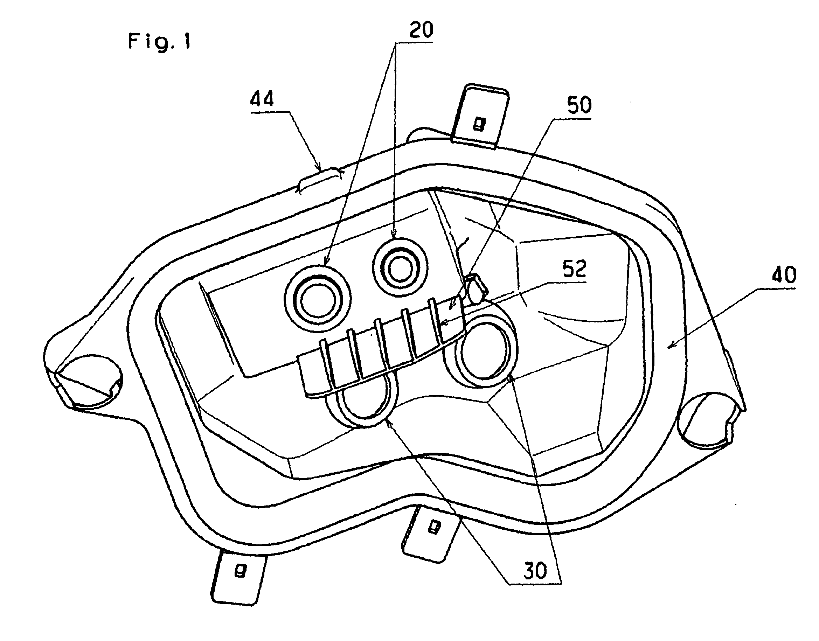

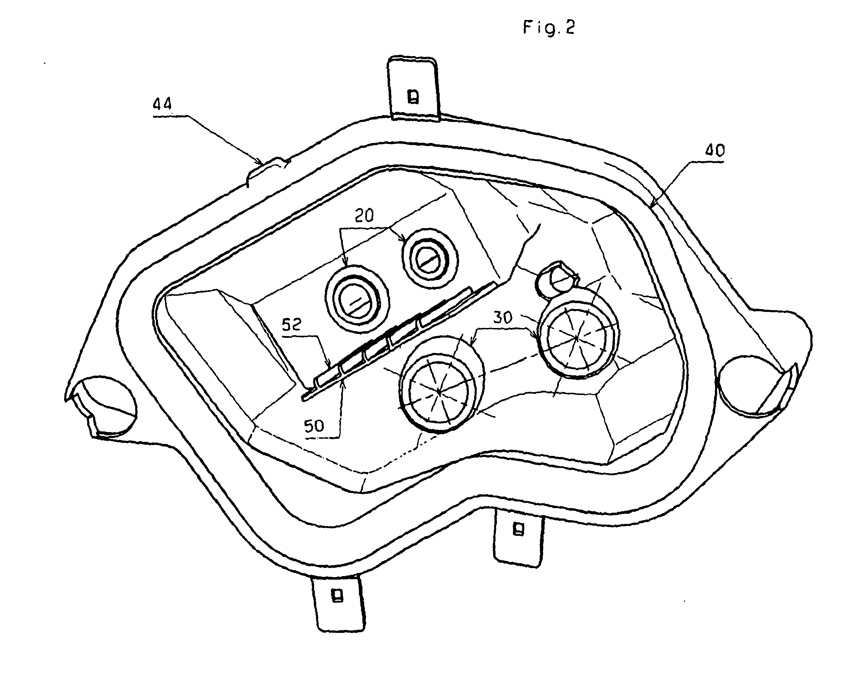

In den Fig. 1 und 2 ist in perspektivischer Darstellung eine Flanschdichtung als bevorzugte Ausführungsform der erfindungsgemäßen Dichtung gezeigt. Die Dichtung ist als ein einstükkiges, glockenförmiges EPDM-Spritzgußteil hergestellt. Sie umfaßt jeweils zwei Dichtabschnitte 20 und 30 für jeweils Verdampferrohre und Wärmetauscherrohre einer Fahrzeugklimaanlage. Die Verdampfer- und Wärmetauscherrohre stellen beispielhafte Anschlußeinrichtungen dar, die durch eine Stirnwand zwischen Motorraum und Fahrgastraum treten.

Die Dichtabschnitte 20 und 30 stehen mit den jeweiligen Anschlußeinrichtungen dichtend in Eingriff; an dieser Schnittstelle können weder Wasser noch Geräusche aus dem Motorraum in den Fahrgastraum eindringen. In der gezeigten Ausführungsform sind die jeweiligen Dichtabschnitte als ring- oder manschettenartige Passungen für die Anschlußeinrichtungen ausgebildet, so daß neben der Dichtung eine jeweilige schwingungsdämpfende Stützung erzielt wird.

Zwischen den Dichtabschnitten 20 und/oder 30 vorliegendes Material stellt als Dämpfungselement eine mechanische und/oder thermische Entkopplung zwischen einzelnen Rohren der Anschlußeinrichtung(en) bereit. Erfindungsgemäß ist zusätzlich ein vorkragendes Dämpfungselement 50 vorgesehen, welches sich lappenartig, auf der dem Motor zugewandten Seite zwischen den Verdampferrohren und zumindest einem der Wärmetauscherrohre erstreckt. Somit wird eine verbesserte Dämpfung zwischen Teilen der Anschlußeinrichtungen erzielt, die unterschiedlichen Vibrationen und/oder Schwingungen unterliegen. Wie dargestellt können Rippen 52 an dem Dämpfungselement ausgebildet sein.

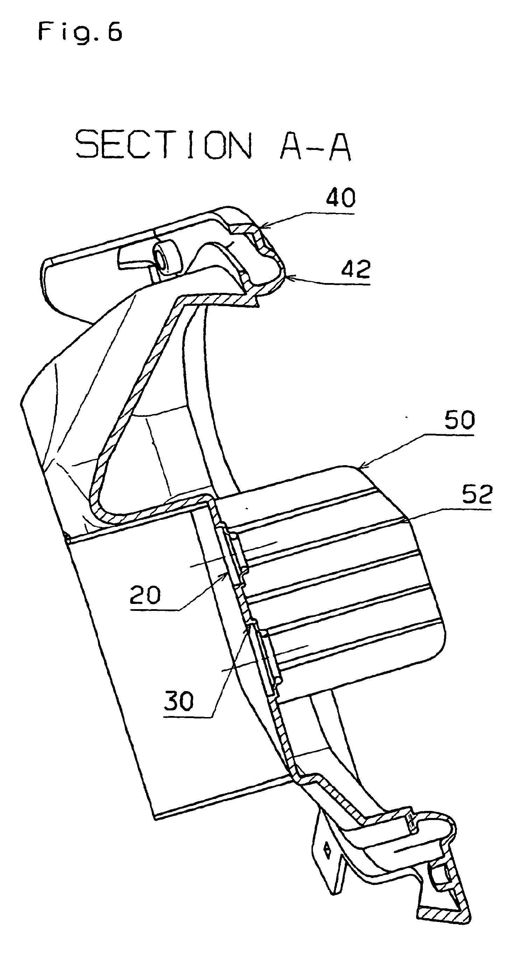

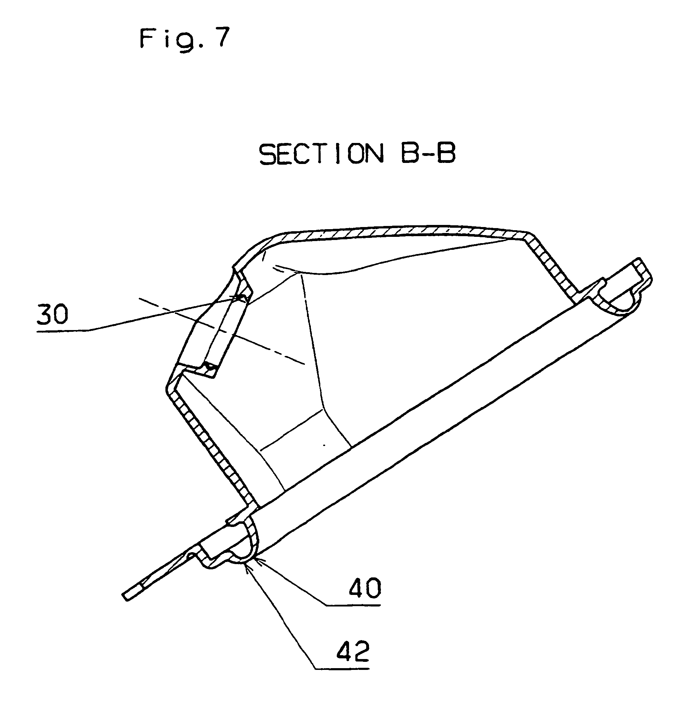

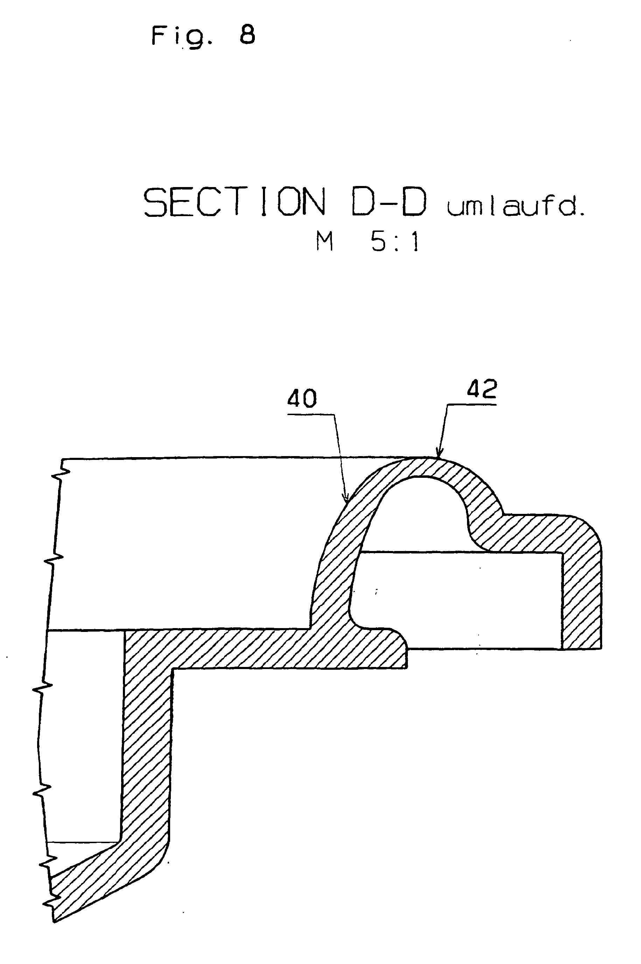

Schließlich umfaßt die Dichtung ein umlaufendes Dichtprofil 40, welches z.B. bei der Montage der Klimaanlage mit einem Karosserieblech z.B. der Stirnwand in Anlage gebracht wird. Das Profil 40, dessen genauere Ausgestaltung später unter Bezugnahme auf die Schnittansichten der Figuren 6-8 beschrieben wird, kann Unebenheiten an der Stirnwand ausgleichen. Das Profil 40 ist vorgespannt und permanent elastisch verformbar. Beim Anpressen der Dichtung an die Stirnwand mittels z.B. der Klimaanlage wird das Profil 40 leicht verformt, so daß die Anlagefläche und somit die Dichtfunktion erhöht wird. Durch den Eingriff zwischen Profil40 und Stirnwand wird eine temperatur- und schwingungsunempfindliche Dichtung erzielt, so daß weder Wasser noch Geräusche durch die Öffnung in der Stirnwand aus dem Motorraum entweichen können.

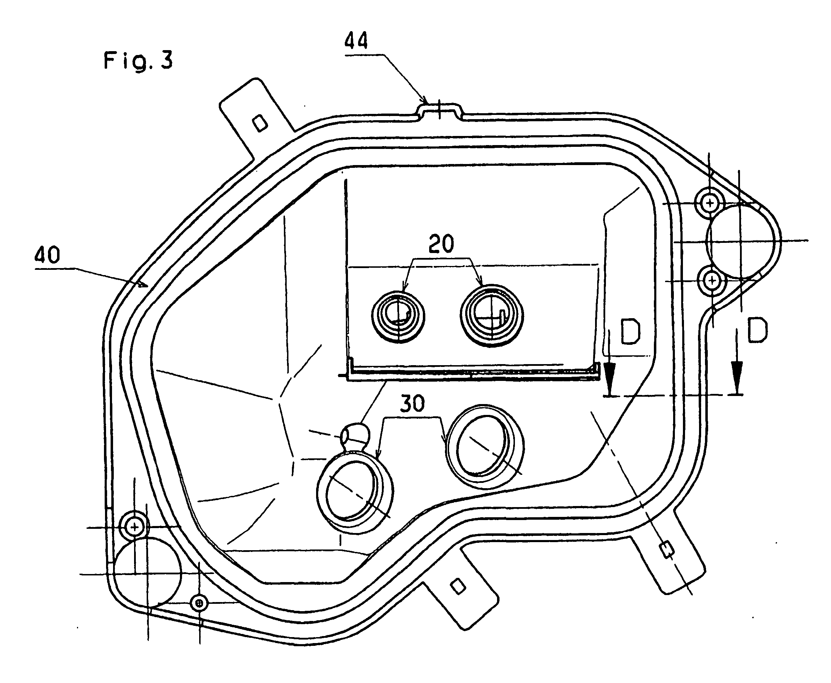

Aus der fahrgastraumseitigen Aufsicht der Fig. 3 ergibt sich, daß das Profil 40 eine Auskragung 44 enthalten kann, mittels welcher einerseits ein Druckausgleich indem Profil erfolgen kann. Andererseits stellt die Auskragung 44 einen Verrutschschutz und/oder eine Stabilisierung der Seitenwandung des Profils bereit.

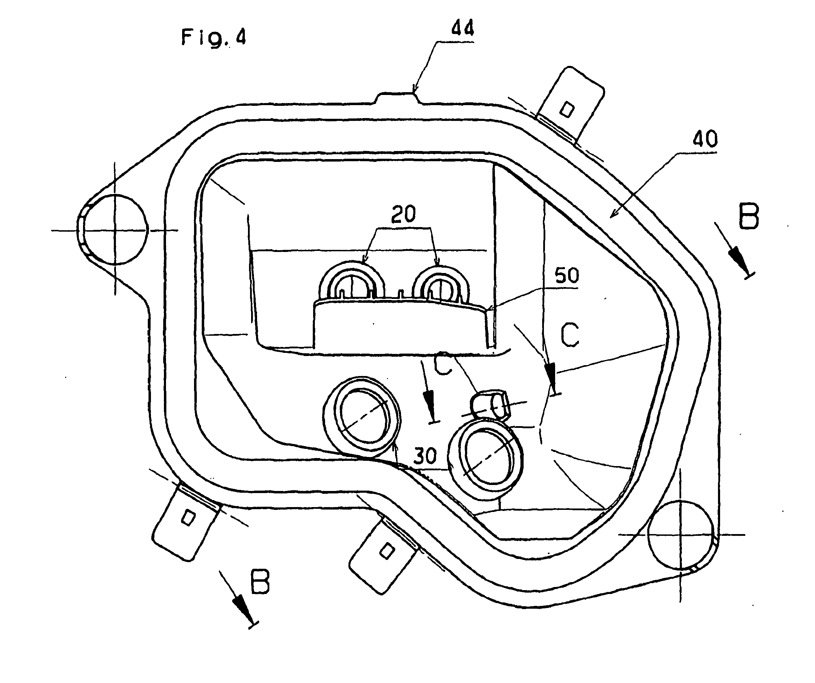

Wie es in der motorraumseitigen Aufsicht der Fig. 4 zu erkennen ist, liegt das Dämpfungselement 50 vorgespannt hin zu den Verdampferrohren (nicht dargestellt) vor. Somit kann über die an der einen Seite ausgebildeten Rippen 52 eine ständige dämpfende Berührung zwischen Dämpfungselement 50 und Verdampferrohren aufrecht erhalten werden.

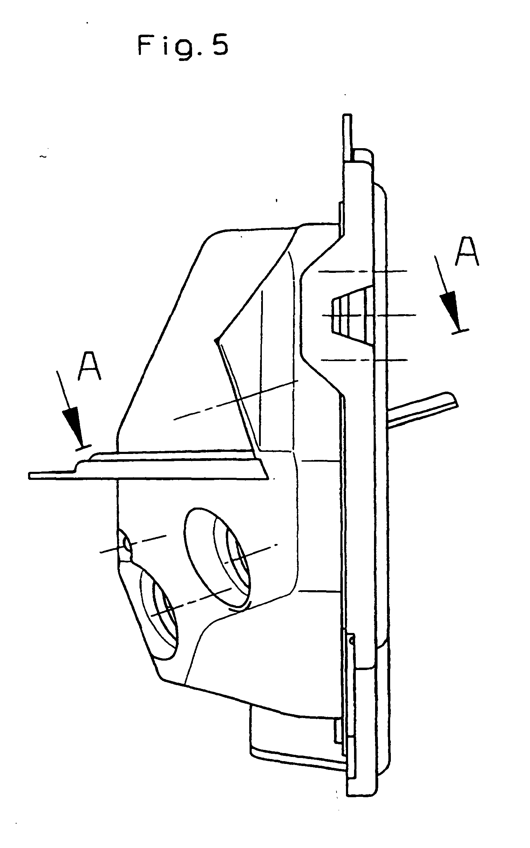

In Fig. 5 ist die in den vorangehenden Zeichnungen dargestellte Flanschdichtung in Seitenansicht gezeigt. Wie es deutlich zu erkennen ist liegen die jeweiligen Dichtabschnitte 20, 30 und 40 in unterschiedlichen Ebenen. Demzufolge wird einerseits eine Beabstandung und andererseits eine Schrägstellung der Achsen der Dichtabschnitte erreicht. Daher wird neben einer verbesserten Servicebarkeit auch ein vielseitiger Einsatz ermöglicht, wobei unterschiedlichste Anordnungen von Anschlußeinrichtungen berücksichtigt und schwingungstechnisch optimiert werden können.

Der Fachmann wird aus den Schnittansichten der Fig. 6-8 erkennen, daß das umlaufende Profil 40 ein Hohlprofil ist. Das Profil 40 springt an seiner Basis im wesentlichen senkrecht von dem Flanschbereich vor und wird durch einen gewölbten Abschnitt 42 fortgesetzt, um schließlich über ein Winkelprofil zu der Ebene des Flanschbereiches zurückzukehren. Es ist zu erwähnen, daß das gezeigte Profil mittels Spritzguß herstellbar ist; die Entformbarkeit wird durch geeignete Wahl der Radien erzielt. Das Ende des Profils 40 kann in diesem Fall als Auswurfabschnitt-verwendet werden.

Um eine verbesserte Dichtfunktion zu erhalten ist das Profil 40 mit einem Materialabschnitt 42 ausgestattet, der über eine reduzierte Materialstärke und somit über eine leichtere Verformbarkeit verfügt. Somit kann bei Anlage und/oder Anpressung der Dichtung an die Stirnwand die Dichtfläche vergrößert werden; der Verformungsabschnitt kann einfach in den Hohlraum des Profils hinein verformt werden.

Bei einer nicht dargestellten Ausführungsform ist der Abschnitt 42 derart ausgebildet, daß er bei Beaufschlagung in den Hohlraum unter Ausbildung von zwei linienartigen Dichteingriffen mit der Stirnwand dringt.

Zusammenfassend läßt sich feststellen, daß mit der erfindungsgemäßen Verwendung einer Dichtung eine kostengünstige Abdichtung zwischen Motorraum und Fahrgastraum erzielt werden kann. Zur Abdichtung einer oder mehrere Anschlußeinrichtungen ist eine einstückige, günstig herstellbare Dichtung ausreichend, die zudem noch eine Dämpfungsfunktion erfüllent.

## Patentansprüche

1. Verwendung einer einstückig ausgeführten Dichtung für einen von zumindest einer Anschlußeinrichtung durchdrungenen Hohlraum in einem Karosserieblech, mit zumindest einem anschlußeinrichtungsseitigen Dichtabschnitt (20, 30) und einem karosserieseitigen Dichtabschnitt (40), **dadurch gekennzeichnet, dass** der karosserieseitige Dichtabschnitt (40) als offenes Hohlprofil mittels einer Klimaanlage bezüglich des Karosseriebleches angepresst in Eingriff steht, und dass jeweils zwei anschlussseitige Dichtabschnitte(20; 30) jeweils mit Verdampferrohren und Wärmetauscherrohren in Eingriff stehen, wobei ein vorkragendes Dämpfungselement (50) vorgesehen ist, welches sich lappenartig, auf der dem Motor zugewandten Seite zwischen den Verdampferrohren und zumindest einem der Wärmetauscherrohre erstreckt, und wobei die Dichtabschnitte(20, 30, 40), und die gesamte Dichtung, einstückig ausgebildet sind.

2. Verwendung nach Anspruch 1, **dadurch gekennzeichnet, dass** die Dichtung ein Spritzgußteil, insbesondere ein EPMD-Spritzgußteil ist.

3. Verwendung nach Anspruch 1 oder 2, **dadurch gekennzeichnet, dass** der karosserieseitige Dichtabschnitt (40) ein peripher umlaufendes Hohlprofil (40) ist.

4. Verwendung nach einem der vorangegangenen Ansprüche, **dadurch gekennzeichnet, dass** das Profil einen Verformungsabschnitt (42), insbesondere von reduzierter Materialstärke enthält.

5. Verwendung nach einem der vorangegangenen Ansprüche, **dadurch gekennzeichnet, dass** zumindest zwei örtlich voneinander getrennte anschlußeinrichtungsseitige Dichtabschnitte (20, 30) vorgesehen sind.

6. Verwendung nach einem der vorangegangenen Ansprüche, **dadurch gekennzeichnet, dass** das Dämpfungselement (50) an zumindest einer Seite mit Rippen (52) versehen ist.

7. Verwendung nach einem der vorangegangenen Ansprüche, **dadurch gekennzeichnet, dass** die Dichtabschnitte (20, 30, 40) bezüglich der Anschlußeinrichtung(en) auf unterschiedlichen Niveaus und/oder in unterschiedlichen Ebenen liegen.

## Claims

1. The use of a sealing configured as integrally formed for a hollow chamber, which is penetrated by at least one connection device, in an automobile body sheet metal, having at least one sealing section (20, 30) on the connection device side and a sealing section (40) on the automobile body sheet metal side, **characterised in that** the sealing section (40) on the automobile body sheet metal side is, as an open hollow profile, pressed in an engaging manner by means of an air conditioner with regard to the automobile body sheet metal, and furthermore **in that** respectively two sealing sections (20, 30) on the connection device side engage with evaporator tubes and heat-exchanger tubes, respectively, wherein a projecting damping element (50) is provided that extends in a lobe-like manner on the side facing toward the engine between the evaporator tubes and at least one of the heat-exchanger tubes, and wherein the sealing sections (20, 30, 40) and the entire sealing are configured as integrally formed.

2. The use as claimed in claim 1, **characterised in that** the sealing is an injection moulded part, in particular an EPMD injection moulded part.

3. The use as claimed in claim 1 or claim 2, **characterised in that** the sealing section (40) on the automobile body sheet metal side is a peripherally circumferential hollow profile (40).

4. The use as claimed in any one of the preceding claims, **characterised in that** the profile contains a forming section (42), in particular of reduced material thickness.

5. The use as claimed in any one of the preceding claims, **characterised in that** at least two sealing sections (20, 30), which are spatially separated from one another and are on the connection device side, are provided.

6. The use as claimed in any one of the preceding claims, **characterised in that** the damping element (50) is provided with ribs (52) on at least one side.

7. The use as claimed in any one of the preceding claims, **characterised in that** the sealing sections (20, 30, 40) are in different levels and/or in different planes with respect to the connection device(s).

## Revendications

1. Utilisation d'un joint réalisé d'un seul tenant pour une cavité traversée par au moins un mécanisme de raccordement dans une tôle de carrosserie, comportant au moins un segment d'étanchéité côté mécanisme de raccordement (20, 30) et un segment d'étanchéité côté carrosserie (40), **caractérisée en ce que** le segment d'étanchéité côté carrosserie (40) en tant que profilé creux ouvert est en prise de manière serrée par rapport à la tôle de carrosserie au moyen d'un climatiseur, et **en ce que** respectivement deux segments d'étanchéité côté raccordement (20 ; 30) sont respectivement en prise avec des tubes d'évaporateur et des tubes de radiateur de chauffage, un élément d'amortissement (50) en saillie s'étendant à la façon d'une patte sur le côté tourné vers le moteur entre les tubes d'évaporateur et au moins un des tubes de radiateur de chauffage étant prévu, et les segments d'étanchéité (20, 30, 40) et la totalité du joint étant réalisés d'un seul tenant.

2. Utilisation selon la revendication 1, **caractérisée en ce que** le joint est une pièce moulée par injection, en particulier une pièce moulée par injection d'EPDM.

3. Utilisation selon la revendication 1 ou 2, **caractérisée en ce que** le segment d'étanchéité côté carrosserie (40) est un profilé creux (40) s'étendant de manière périphérique.

4. Utilisation selon l'une quelconque des revendications précédentes, **caractérisée en ce que** le profilé contient un segment de déformation (42) présentant notamment une épaisseur de matériau réduite.

5. Utilisation selon l'une quelconque des revendications précédentes, **caractérisée en ce qu'**au moins deux segments d'étanchéité côté mécanisme de raccordement (20, 30) séparés localement l'un de l'autre sont prévus.

6. Utilisation selon l'une quelconque des revendications précédentes, **caractérisée en ce que** l'élément d'amortissement (50) est pourvu de nervures (52) sur au moins un côté.

7. Utilisation selon l'une quelconque des revendications précédentes, **caractérisée en ce que** les segments d'étanchéité (20, 30, 40) se situent sur différents niveaux et/ou dans différents plans par rapport au(x) mécanisme(s) de raccordement.
